# EUROPEAN PATENT APPLICATION

(11) **EP 4 029 589 A1**
(43) Date of publication of application: **20.07.2022**
(21) Application number: 21151697.6
(22) Date of filing: 14.01.2021
(51) Int. Cl.: B01D 39/20, B01D 39/16, B01D 39/18, B01D 39/06

(54) **A FILTER MEDIA**

(71) Applicant: Ahlstrom-Munksjö Oyj, 00101 Helsinki (FI)
(72) Inventor: Monko, Tyler, Carlisle, PA Pennsylvania 17015 (US); Cousart, Frank, Mt. Holly Springs, PA 17065-0238 (US)
(74) Representative: Laine IP Oy

(57) **Abstract**

A filter media suitable for use in filtering fluids is provided. The filter media comprises a first component, said first component having a core with an Al₂O₃ content of at least 10 wt% and a nanoalumina coating that at least partially coats the core.

## Description

### FIELD OF THE INVENTION

The present invention relates to a filter media, more particularly, to a filter media comprising Al₂O₃ containing particles or fibres that have been coated with nanoalumina, which may be used for filtering contaminants such as positively charged species from fluids such as water.

### INTRODUCTION

Purification of water for human consumption, industrial use, and waste treatment is a worldwide problem. Most water purification technologies involve some form of mechanical filtration or size exclusion. These techniques generally involve the use of submicron filters to remove pathogens (such as bacteria and viruses), metals, and particulate matter from the water.

A variety of water filter media are known. These typically include particles comprising one or more of activated carbon, zeolites, metal oxides, clays, diatomaceous earth, and other materials, which are usually dispersed within a polymeric binder that holds the particles in position during filtration and reduces entrainment of the particles into the filtered water.

Filter media of the prior art include substrates having a nanoalumina (aluminium oxide/hydroxide) coating. For example, US 9,309,131 describes powdered siliceous components (including diatomaceous earth, perlite, talc, vermiculite, sand, and calcine composites) on which nanoalumina has been precipitated as being suitable sorbents for purifying water. Siliceous components have been defined as materials which have silica as a primary component, typically in an amount of at least 40 wt%. Although these types of filter media are known to be capable of removing contaminants from water to a moderate extent, there is scope for improvement in their performance.

### SUMMARY OF THE INVENTION

In accordance with a first aspect of the invention, there is provided a filter media comprising a first component, said first component having a core with an Al₂O₃ content of at least 10 wt% and a nanoalumina coating that at least partially coats the core.

The Al₂O₃ content of the core may be at least 20 wt%, preferably at least 40 wt%, preferably at least 60 wt%, or preferably at least 80 wt%.

The SiO₂ content of the core may be less than 60 wt%, preferably less than 40 wt %, preferably less than 20 wt%.

The core may be in the form of a fibre, plate or powder particle.

The core may be selected from one or more of aluminium oxide powder, alumina fibres, crystalline aluminosilicates, and non-crystalline aluminosilicates.

The core may have an average size of from 0.1 to 50 µm. Where the core is a powder particle, the average particle size may be from 1 to 30 µm. Where the core is a fibre, the average diameter of the fibre may be from 1 to 5 µm.

The first component may comprise from 10 to 99 wt%, preferably from 50 to 95 wt%, or more preferably from 70 to 90 wt% nanoalumina coating.

The core may constitute from 1 to 90 wt%, preferably from 5 to 50 wt%, more preferably from 10 to 30 wt% of the first component.

The filter media may further comprise a second component comprising matrix fibres. The matrix fibres may preferably be selected from one or more of cellulose fibres, synthetic fibres, and fibrillated fibres.

The matrix fibres may be at least partially coated with nanoalumina.

The nanoalumina may be present in the filter media in an amount of from 20 to 70 wt%, preferably from 30 to 60 wt%, preferably from 40 to 50 wt% based on the total weight of the filter media.

The filter media may comprise less than 1 wt% glass fibres, preferably less than 0.1 wt% glass fibres.

The filter media may have a mass ratio of first component to second component of from 1:1 to 1:10, preferably from 1:3 to 1:6.

In accordance with a second aspect of the invention, there is provided a method of manufacturing a first component for a filter media as defined above, the method comprising at least partially coating a core with nanoalumina.

In accordance with a third aspect of the invention, there is provided a method of manufacturing a filter media as defined above, the method comprising:
(a) forming a wet laid sheet from a fibrous slurry comprising the first component; and
(b) drying the wet laid sheet to obtain the filter media.

The method may comprise coating the core with nanoalumina to form the first component.

The fibrous slurry may further comprise matrix fibres and/or binder fibres.

The method may comprise at least partially coating the matrix fibres and/or binder fibres with nanoalumina.

The method may comprise simultaneously coating the core, matrix fibres, and/or binder fibres with nanoalumina.

The method may comprise sequentially coating the core, matrix fibres, and/or binder fibres with nanoalumina.

In accordance with a fourth aspect of the invention, there is provided a method of filtering a fluid, the method comprising passing the fluid through the filter media defined above.

The present invention will be better understood in light of the following examples that are given in an illustrative manner and should not be interpreted in a restrictive manner and of the accompanying figures.

### BRIEF DESCRIPTION OF THE FIGURES

In the accompanying Figures:
- Figure 1: is a graph showing the relative abilities of four different filter media to filter erythrosine dye from water. The filter media each contain a different glass type having a different alumina content.
- Figure 2: is a graph showing the relative abilities of seven different filter media to filter erythrosine dye from water. The filter media each contain a different core material.

### DETAILED DESCRIPTION

As used herein and in the accompanying claims, unless the content requires otherwise, the terms below are intended to have the definitions as follows.

"Comprise" or variations such as "comprises" or "comprising" will be understood to imply the inclusion of a stated integer or group of integers but not the exclusion of any other integer or group of integers.

"Nanoalumina" refers to a composition of aluminium oxide hydroxide [AIO(OH)] and aluminium hydroxide [Al(OH)₃], which is obtained by reacting aluminium metal with an aqueous alkaline solution, such as NaOH, KOH or ammonium hydroxide.

"Fibre" is a fibrous or filamentary structure having a high aspect ratio of length to diameter.

"Staple fibre" means a fibre which naturally possesses or has been cut or further processed to definite, relatively short, segments or individual lengths.

"Fibrous" means a material that is composed predominantly of fibre and/or staple fibre.

The terms "non-woven" or "web" refers to a collection of fibres and/or staple fibres in a web or mat which are randomly interlocked, entangled and/or bound to one another so as to form a self-supporting structural element.

"Synthetic fibre" refers to fibres made from fibre-forming substances including polymers synthesised from chemical compounds, modified or transformed natural polymer and silicious (glass) materials. Such fibres may be produced by conventional melt-spinning, solution-spinning, solvent spinning and like filament production techniques.

The present disclosure provides a filter media suitable for use in a variety of industrial and domestic fluid purification applications. The filter media is particularly suitable for removing impurities, such as heavy metals (e.g. arsenic, antimony, cadmium, cobalt, copper, iron, lead and oxidised lead, mercury, nickel, palladium, selenium, silver, thallium, tin and organotin, and zinc), dyes, oils, biological materials (e.g. bacteria, viruses, natural organic matter, cysts, and cell debris), and trace pharmaceuticals from fluids, such as water.

The filter media includes a first component, which has a core with an Al₂O₃ content of at least 10 wt% or preferably at least 20 wt%. The Al₂O₃ content of the core may be at least 15 wt%, 25 wt%, 30 wt%, 40 wt%, 45 wt%, 50 wt%, 55 wt%, 60 wt%, 65 wt%, 70 wt%, 75 wt%, 80 wt%, 85 wt%, 90 wt%, 95 wt% or 100 wt%. In some embodiments the Al₂O₃ content of the core is preferably at least 60 wt%, preferably at least 80 wt%, or preferably 100 wt%. In some embodiments, the Al₂O₃ content of the core is from 47 to 52 wt%, from 70 to 100 wt%, or from 95 to 97 wt%.

The SiO₂ content of the core may be less than 65 wt%, 60 wt%, 55 wt%, 50 wt%, 45 wt%, 40 wt%, 35 wt%, 30 wt%, 25 wt%, 20 wt%, 15 wt%, 10 wt%, 5 wt%, 1 wt%, or 0.1 wt%. In some embodiments, the SiO₂ content of the core is preferably less than 40 wt %, or preferably less than 20 wt%.

The core may comprise a material selected from one or more of aluminium oxide (Al₂O₃, Al₂O or AIO), alumina, crystalline aluminosilicates, and non-crystalline aluminosilicates. The core may be in the form of a fibre, plate, powder particle, crystalline particle, amorphous particle, or porous particle (e.g. microporous or mesoporous particle). In some embodiments, the core may be selected from an Al₂O₃ powder, an Al₂O₃ fibre (e.g. a polycrystalline wool), a powdered aluminosilicate (such as a zeolite), an aluminosilicate fibre (e.g. a ceramic fibre, such as a refractory ceramic fiber), an aluminosilicate glass fibre, and an E-glass (alumino-borosilicate glass with less than 1% w/w alkali oxides) fibre. The E-glass core may have an alumina content of greater than 10 wt%, or from 10 to 20 wt%, preferably from 13-16 wt%.

The core may have an average size of from 0.1 to 50 µm. Where the core is in the form of a powder particle, the average size may be from 1 to 30 µm, and where the core is in the form of a fibre, the average diameter of the fibre may be from 1 to 5 µm.

The core can constitute from 1 to 90 wt%, preferably from 5 to 50 wt%, more preferably from 10 to 30 wt%. In some embodiments, the core can constitute from 40 to 80 wt%, preferably from 50 to 70 wt% of the first component.

The core can be characterised as having a high alumina (Al₂O₃) content and a low silica content and can accordingly be defined as not being a glass. Although some forms of glass contain alumina, the quantity of alumina in glasses is generally low (i.e less than 25%). Glasses are typically characterised as having a high silica content of greater than 50% or even greater than 60% SiO₂. Since the core of the first component may have an alumina content of at least 25 wt% and a silica content of less than 60%, it may not be defined as a glass and can therefore be used in filter media in jurisdictions that prohibit glass-containing water filter media. Accordingly, the filter media may comprise less than 1 wt% glass fibres or particles, preferably less than 0.1 wt% glass fibres or particles, or even no detectable glass fibres or particles.

A nanoalumina coating at least partially coats the core, and preferably substantially fully coats the core. The nanoalumina may be present in the filter media in an amount of from 20 to 70 wt%, preferably from 25 to 65 wt%, from 30 to 60 wt%, from 35 to 55 wt%, or from 40 to 50 wt% based on the total weight of the filter media.

The first component may comprise from 10 to 99 wt%, preferably from 50 to 95 wt%, or preferably from 70 to 90 wt% nanoalumina coating.

In use, the nanoalumina coating becomes positively charged when submerged in water, such as when water is passed through the filter media. The positive charge attracts and entraps negatively charged impurities in the water electrostatically, thereby permitting the water to be purified by the filter media.

It has been found that a filter media of the present disclosure in which the core has a high alumina content exhibits superior filtering performance by comparison with filter media having a low alumina content in their core. Without wishing to be bound by theory, it is believed that this improvement arises because increasing the alumina content of the core increases the positive charge in the nanoalumina coating.

The filter media may further comprise a second component comprising matrix fibres for structural support. The matrix fibres may be selected from one or more of cellulose fibres, synthetic fibres, and fibrillated fibres. The cellulose fibres may be selected from one or more of softwood fibres, hardwood fibres, vegetable fibres and reconstituted cellulose fibres (such as lyocell or Rayon fibres). The matrix fibres can be blended with the first components to produce a non-woven filter media. The matrix fibres may be at least partially coated with nanoalumina.

The filter media can comprise at least 80 wt%, preferably at least 90 wt%, or more preferably at least 95 wt% synthetic matrix fibres based on total weight of matrix fibres. The synthetic matrix fibres can be selected from one or more of synthetic polymeric fibres, modified or transformed natural polymeric fibres, or silicious (glass) fibres. Exemplary fibres include polyesters (e.g. polyalkylene terephthalates such as polyethylene terephthalate (PET), polybutylene terephthalate (PBT) and the like), polyalkylenes (e.g. polyethylenes, polypropylenes and the like), polyacrylonitriles (PAN), and polyamides (nylons, e.g. nylon-6, nylon 6,6, nylon-6,1 2, and the like).

According to another alternative, the matrix fibres can comprise a mixture of cellulose fibres and synthetic fibres. The synthetic fibres can be present in the filter media in an amount of up to 50 wt%, preferably between 10 wt% and 30 wt%, or preferably between 15 wt% and 25 wt% of the total weight of matrix fibres in the filter media.

To enhance bonding between the first components and matrix fibres, the filter media may include binder fibres, such as the Tepyrus^{®} PET microfibres manufactured by Teijin^{®}. Binder fibres comprise a thermoplastic portion that can soften or melt during processing of the filter media, for example during a calendaring step. Binder fibres can be monocomponent or bicomponent. The bicomponent thermoplastic fibres may comprise a thermoplastic core fibre surrounded by a meltable coating of thermoplastic polymer which has a lower melting point than the core.

The filter media may include a polymeric binder, such as styrene acrylic, acrylic, polyethylene vinyl chloride, styrene butadiene rubber, polystyrene acrylate, polyacrylates, polyvinyl chloride, polynitriles, polyvinyl acetate, polyvinyl alcohol derivates, starch polymers, phenolics and combinations thereof, including both waterborne and solvent versions. In some cases, the polymeric binder may be in the form of a latex, such as a water-based latex emulsion.

The filter media may further include one or more additive components. The additive component may be selected from: a wet strength resin, such as a polyamide-epichlorohydrin (PAE) resin (e.g. Kymene^{®} GHP resin), which may be added to enhance the wet strength of the filter media; an acrylic co-polymer (e.g. Lubrizol^{®} Hycar^{®} 26450), which may be added to enhance general cohesion of the components of the filter media; a dyeing agent, which may be required to give the filter media a favourable appearance; fibre retention agents; separation aides (e.g. silicone additives and associated catalysers); a hydrophilic or hydrophobic agent; a wetting agent; an antistatic agent; or an antimicrobial agent. If present, these additives may be included in amounts of greater than 0 wt%, 0.01 wt%, 0.1 wt%, 1 wt%, 5 wt%, 10 wt% and/or less than about 30 wt%, 25 wt%, 20 wt%, 15 wt%, 10 wt%, 9 wt%, 8 wt%, 7 wt%, 6 wt%, 5 wt%, 4 wt%, 3 wt%, 2 wt%, 1 wt%, or any combination thereof, including for example between 0.01 wt% and 1 wt%, based on the total weight of the filter media.

The filter media may have a mass ratio of first component to second component of from 1:1 to 1:10, preferably from 1:3 to 1:6.

The filter media may include pores through which a fluid may pass during filtering. The pores may have a pore size diameter of from 0.5 to 10 µm, preferably from 0.6 to 5 µm, or from 0.7 to 4 µm. The pores may have an average pore size of from 1 to 1.5 µm, preferably, from 1.1 to 1.4 µm.

The disclosure extends to a method of manufacturing the first component defined herein. The method includes at least partially coating the core with nanoalumina. The coating may be performed before or during formation of the filter media.

The disclosure further extends to a method of manufacturing the filter media defined herein. The method comprises:
(a) forming a wet laid sheet from a fibrous slurry comprising the first component; and
(b) drying the wet laid sheet to obtain the filter media.

The fibrous slurry may further comprise matrix fibres and/or binder fibres. The method may comprise at least partially coating the matrix fibres and/or binder fibres with nanoalumina. The method may comprise simultaneously coating the core, matrix fibres, and/or binder fibres with nanoalumina. Alternatively, the method may comprise sequentially coating the core, matrix fibres, and/or binder fibres with nanoalumina in any order.

The method may include at least partially coating the core with nanoalumina to form the first component. The first component may then be combined with matrix fibres, optional binder fibres, optional polymeric binder, and/or optional additive components, and an aqueous medium to form the fibrous slurry. The wet laid sheet can then be formed from the slurry.

The method may include forming the fibrous slurry by combining the core, matrix fibres, and/or binder fibres in a solution (e.g. an aqueous solution) with nanoalumina, and at least partially coating the core, matrix fibres and/or binder fibres in the fibrous slurry with the nanoalumina simultaneously. In this process, the nanoalumina can be formed in situ by reacting aluminium metal (typically in the form of a powder or flakes) in an alkaline solution (such as an aqueous solution of NaOH, KOH, or ammonium hydroxide) at a pH of from 10 to 14, preferably from 11 to 13, more preferably at about pH 12. As the reaction proceeds, the nanoalumina generated by the reaction is deposited on the core, matrix fibres, and/or binder fibres. After completion of the reaction, the pH of the solution may be adjusted to between pH 6 and pH 7, preferably about pH 6.5, by addition of an acid (e.g. HCl, H₂SO₄, HNO₃, etc). One or more of the above-mentioned optional polymeric binders and/or additive components can be combined with the fibrous slurry once the pH has been neutralised. The combined mixture can then be formed into wet laid sheets. The sheets can be oven dried to form the final filter media. The dried filter media may be corrugated, cut, folded, pleated and assembled into the filtration product that will ultimately be used.

The filter media is suitable for use in a method of filtering a fluid, such as water. Such a method includes passing the fluid through the filter media. The fluid may be urged through the filter media by application of an externally applied pressure, or by hydrostatic pressure. During filtration, impurities in the fluid bind to the filter media (e.g. by electrostatic adhesion to the nanoalumina coating) and/or by physical occlusion, resulting in purified fluid exiting the filter media.

The filter media may be suitable for use in filtering fluids in industrial applications, for example, removing contaminants from municipal drinking or waste water, treating industrial waste water containing chemical or pharmaceutical contaminants, ameliorating mine waste water, or treating water contaminated by oil and gas drilling or processing operations.

The filter media may also be suitable for use in filtering fluids in domestic applications, such as purifying municipal tap water for drinking or cooking purposes.

### EXAMPLES

### Erythrosine Test Conditions

Erythrosine is a food grade pink dye and like MS2 virus is negatively charged at a pH higher than 3.9. The quantification of erythrosine is rather straightforward compared to MS2 Virus. The erythrosine content can be quantified for example using a spectrophotometer. Erythrosine retention by a filter media can be a good indicator on the effectiveness of the filter media for MS2 virus retention.

Handsheets containing the core materials were prepared with the following components:
- 7.8% matrix fibres (reconstituted fibrillated cellulose fibres - Lyocell 40),
- 15.3% matrix fibres (Trevira T256 synthetic bicomponent fibres),
- 33.5% core material,
- 43.5% nanoalumina (after reaction).

The handsheets were cut into a 25mm sample which was inserted into a sample holder and wet with water. An aqueous solution of erythrosine (10 mg/L) was prepared. The erythrosine solution was passed through the sample at a flow rate of 15 ml/min and the absorbance of each 20 ml of filtrate was determined using a spectrophotometer. The results were plotted against volume of eluent.

### Example 1

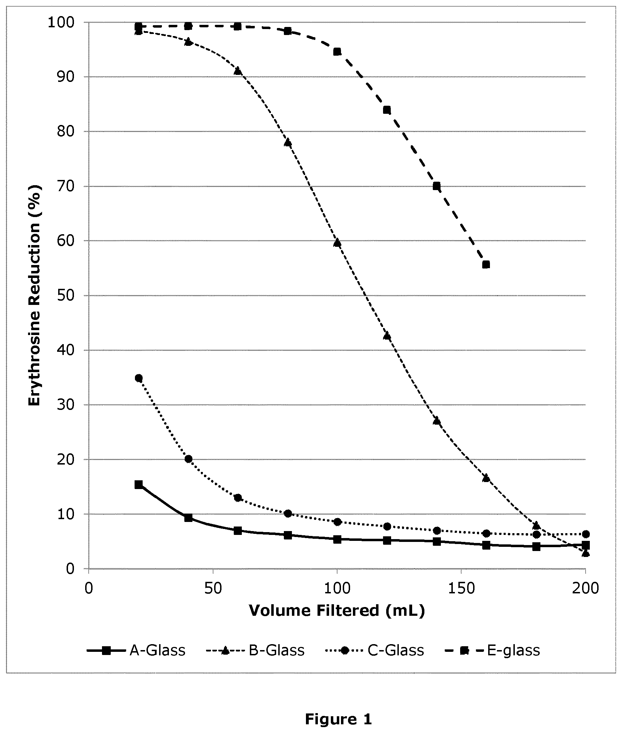

Figure 1 shows the comparative ability of four different filter media to filter erythrosine dye from water (using the erythrosine test conditions). Each of the filter media includes a different glass type having a different alumina content. The alumina content of the four glass types are presented in Table 1 below.

**Table 1: The SiO₂ and Al₂O₃ content of the four glass types used to prepare the filter media shown in Figure 1.**

| | **A-Glass** | **B-Glass** | **C-Glass** | **E-Glass** |
|---|---|---|---|---|
| SiO₂ (%) | 68.0 - 71.0 | 55.0 - 60.0 | 63.0 - 67.0 | 50.0 - 56.0 |
| Al₂O₃ (%) | 2.5 - 4.0 | 4.0 - 7.0 | 3.0 - 5.0 | 13.0 - 16.0 |

Handsheets containing the different glass types had the following ingredients:
- 7.8% matrix fibres (reconstituted fibrillated cellulose fibres - Lyocell 40),
- 15.3% matrix fibres (Trevira T256 synthetic bicomponent fibres),
- 33.5% core material - Lauscha^{®} (A,B,C,E)-Glass, (glass fibre),
- 43.5% nanoalumina (after reaction).

The performance for contaminant removal was estimated using the erythrosine test method.

A higher erythrosine reduction for a given amount of filtered volume indicated a higher performance. As shown in Figure 1, E-glass filtered the greatest quantity of erythrosine from the water over the course of the experiment until the volume of filtered water exceeded 140 mL, at which point B-Glass filtered more erythrosine. C-Glass and A-Glass showed much lower filtering abilities than E-glass and B-glass. A comparison of the alumina contents of the four glasses shows that there is a correlation between filtration performance and alumina content. E-glass, which has the highest alumina content, filtered the greatest quantity of erythrosine.

### Example 2

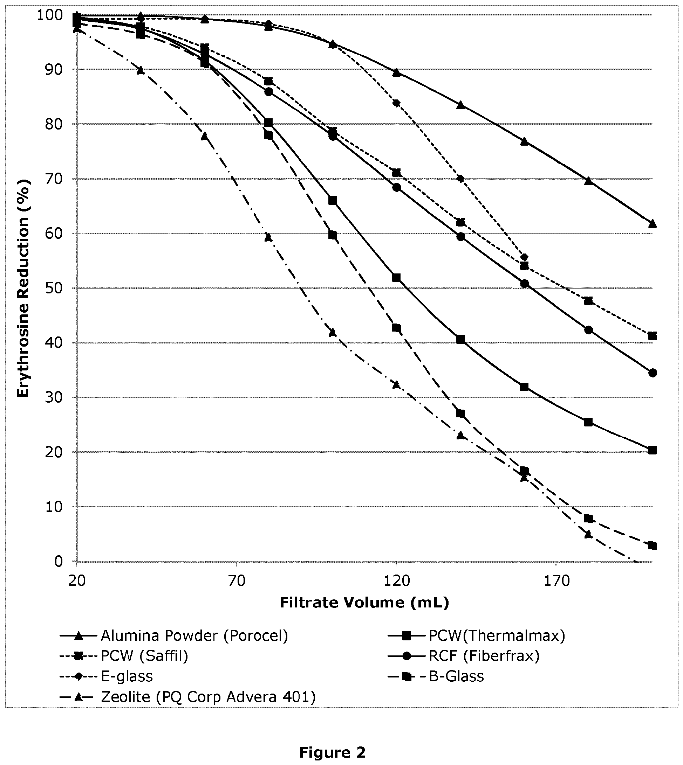

Figure 2 shows the comparative ability of five different filter media to filter erythrosine dye from water (using the erythrosine test conditions described above). E-glass and B-glass samples are plotted on the same graph in Figure 2 for comparison.

The alumina and silica contents of the five core materials used to prepare the tested filter media are presented in Table 2 below.

**Table 2: The SiO₂ and Al₂O₃ content of the five core materials used to prepare the filter media shown in Figure 2.**

| **Alumina-containing Component** | **Material Type** | **Al₂O₃ content** | **SiO₂ content** |
|---|---|---|---|
| **Porocel^{®} Al₂O₃ 15 um** | Activated alumina / aluminum oxide powder | 70-99+% | 0.02-20% |
| **Unifrax Saffil^{®} HA** | Polycrystalline Al₂O₃ wool (PCW) | 95-97% | 3-5% |
| **PQ Corp Advera^{®} 401** | hydrated sodium aluminosilicate (zeolite) | 28% | 33% |
| **Thermalmax^{®} (Denka) Alcen^{®} B97T4** | Polycrystalline Al₂O₃ wool (PCW) | 97% | 3% |
| **Unifrax^{®} Fiberfrax^{®} HS95C** | Refractory ceramic fiber (RCF) | 47-52% | 48-53% |

The furnishes used for the preparation of the handsheets had the ingredients shown in Table 3 below:

**Table 3: Components of tested handsheets (values given in wt%)**

| **Alumina-containing Component** | **Alumina containing component** | **Nanoalumina (After reaction)** | **Lyocell L-010-4** | **Teijin^{®} Tepyrus^{®} 0.1 T TA04PN 3 um** |
|---|---|---|---|---|
| **Porocel^{®} Al₂O₃ 15 um** | 10.0% | 45.0% | 40.0% | 4.0% |
| **Unifrax^{®} Saffil^{®} HA** | 10.0% | 45.0% | 45.0% | - |
| **PQ Corp Advera^{®} 401** | 10.0% | 45.0% | 40% | 5.0% |
| **Thermalmax^{®} (Denka) Alcen B97T4** | 10.0% | 45.0% | 45.0% | - |
| **Unifrax^{®} Fiberfrax^{®} HS95C** | 15.0% | 45.0% | 41.0% | - |

The small variations for the ingredients were made to preserve the mechanical properties of the sheets. For example, the Fiberfrax^{®} sheet was tighter than the Saffil^{®} and Alcen^{®} sheets, so more Fiberfrax^{®} was added to increase the pore size. The Teijin^{®} fibers were added to the Porocel^{®} and PQ Corp Advera^{®} sheets to improve their stiffnesses.

The filter media were prepared as follows: the alumina-containing component and lyocell (and, if applicable, Teijin^{®} Tepyrus^{®} (PET fiber)) were dispersed in water and mixed. When the mixture was homogeneous, aluminium powder was added under agitation and the pH of the mixture adjusted to pH 12 by the addition of NaOH solution. The mixture was then heated to about 60°C until completion of the reaction to form nanoalumina. The end of reaction was accompanied by cessation of hydrogen bubbling. The mixture was then heated at 73°C before being neutralized by sulfuric acid to pH 6.5. Additives such as Kymene GHP (wet stream additive) and Lubrizol (Hycar) 26450 Latex (for general cohesion) were added to the mixture after neutralization to improve the properties of the non-woven.

Handsheets of the filter media were prepared by a wait-laying process and dried. Their physical properties are summarized in Table 4 below.

**Table 4: Properties of the filter media**

| | **Porocel Al₂O₃ 15 um** | **Unifrax Saffil HA** | **Thermalmax (Denka) Alcen B97T4** | **PQ Corp Advera 401** | **Unifrax Fiberfrax HS95C** |
|---|---|---|---|---|---|
| **Drainage Time (s)** | 18 | 14 | 15 | 12 | 12 |
| **Basis Weight (gsm)** | 253 | 250 | 245 | 252 | 260 |
| **Thickness (mil/microns)** | 815 | 930 | 855 | 868 | 952 |
| **Densometer 1-20-400 (s)** | 38.8 | 23.6 | 42.4 | 8.4 | 34 |
| **2" Rapidity (mL/min)** | 5.5 | 3 | 6.5 | 6.5 | 6.5 |
| **10" Rapidity (mL/min)** | | 10 | 30 | 28 | 31 |
| **Wet Burst (in H2O)** | 89 | 45 | 82 | | - |
| **Tensile (lb/in)** | 8.79 | 8.23 | 9.34 | 7.37 | 6.76 |
| **Edge Tear (lb/in)** | 9.86 | 8.43 | 7.56 | 7.90 | 8.49 |
| **Minimum Pore (microns)** | 0.7557 | 0.8221 | 0.7145 | 0.7108 | 0.7298 |
| **Average Pore (microns)** | 1.2595 | 1.3228 | 1.1532 | 1.1815 | 1.2616 |
| **Maximum Pore (microns)** | 3.1411 | 3.7854 | 3.0294 | 2.7825 | 3.3245 |

The present invention can be further understood with reference to the following paragraphs:
1. A filter media comprising a first component, said first component having a core with an Al₂O₃ content of at least 10 wt%, preferably at least 20 wt%, and a nanoalumina coating that at least partially coats the core.
2. The filter media of any preceding paragraph, wherein the core is in the form of a fibre, plate, powder particle, crystalline particle, amorphous particle, or porous particle (e.g. microporous or mesoporous particle).
3. The filter media of any preceding paragraph, wherein the core has an Al₂O₃ content of at least 10 wt%, preferably at least 20 wt%, 30 wt%, 40 wt%, 50 wt% or 60wt%, and is in the form of a fibre.
4. The filter media of paragraph 3, wherein the core is an alumino-borosilicate glass fibre with less than 1% w/w alkali oxides (E-glass).
5. The filter media of paragraph 3 or 4, said first component having a glass fibre core with an Al₂O₃ content of at least 10 wt%, preferably from 10 to 20 wt%, or preferably from 13-16 wt%, and a nanoalumina coating that at least partially coats the core, wherein the core is an alumino-borosilicate glass fibre with less than 1% w/w alkali oxides (E-glass), wherein the glass fibre core has an average diameter of from 1 to 5 µm, wherein the filter media further comprises matrix fibres, preferably selected from one or more of cellulose fibres, synthetic fibres, and fibrillated fibres, wherein the matrix fibres are at least partially coated with nanoalumina, and wherein the filter media comprises nanoalumina in an amount of from 30 to 60 wt%, or from 40 to 50 wt% based on the total weight of the filter media.
6. The filter media of paragraph 3, said first component having a core with an Al₂O₃ content of at least 10 wt% and a nanoalumina coating that at least partially coats the core, wherein the core is a fibre selected from an Al₂O₃ fibre (e.g. a polycrystalline wool), an aluminosilicate fibre (e.g. a ceramic fibre) and an aluminosilicate glass fibre, wherein the fibre core has an average diameter of from 1 to 5 µm, wherein the filter media further comprises matrix fibres, preferably selected from one or more of cellulose fibres, synthetic fibres, and fibrillated fibres, wherein the matrix fibres are at least partially coated with nanoalumina, and wherein the filter media comprises nanoalumina in an amount of from 30 to 60 wt%, or from 40 to 50 wt% based on the total weight of the filter media.
7. The filter media of paragraph 1 or 2, wherein the core has an Al₂O₃ content of at least 20 wt%, preferably at least 30 wt%, 40 wt%, 50 wt% or 60 wt%, and is in the form of a plate.
8. The filter media of paragraph 7, said first component having a core with an Al₂O₃ content of at least 20 wt%, preferably from 50 to 100 wt%, and a nanoalumina coating that at least partially coats the core, wherein the core is selected from an aluminosilicate plate and an Al₂O₃ plate, wherein the core has an average size of from 1 to 30 µm, wherein the filter media further comprises matrix fibres, preferably selected from one or more of cellulose fibres, synthetic fibres, and fibrillated fibres, wherein the matrix fibres are at least partially coated with nanoalumina, and wherein the filter media comprises nanoalumina in an amount of from 30 to 60 wt%, or from 40 to 50 wt% based on the total weight of the filter media.
9. The filter media of paragraph 1 or 2, wherein the core has an Al₂O₃ content of at least 20 wt%, preferably at least 30 wt%, 40 wt%, 50 wt% or 60wt%, and is in the form of a powder particle.
10. The filter media of paragraph 9, said first component having a core with an Al₂O₃ content of at least 20 wt%, preferably from 50 to 100 wt%, and a nanoalumina coating that at least partially coats the core, wherein the core is selected from an aluminosilicate powder (such as a zeolite), an Al₂O₃ powder, and an E-glass powder, wherein the core has an average size of from 1 to 30 µm, wherein the filter media further comprises matrix fibres, preferably selected from one or more of cellulose fibres, synthetic fibres, and fibrillated fibres, wherein the matrix fibres are at least partially coated with nanoalumina, and wherein the filter media comprises nanoalumina in an amount of from 30 to 60 wt%, or from 40 to 50 wt% based on the total weight of the filter media.
11. The filter media of any preceding paragraph, wherein the first component comprises from 10 to 99 wt%, preferably from 50 to 95 wt%, or more preferably from 70 to 90 wt% nanoalumina coating.
12. The filter media of any preceding paragraph, wherein the core constitutes 1 to 90 wt%, preferably from 5 to 50 wt%, more preferably from 10 to 30 wt% of the first component.
13. The filter media of any of paragraphs 5, 6, 8 or 10, wherein the matrix fibres comprise cellulose fibres.
14. The filter media of any of paragraphs 5, 6, 8 or 10, wherein the matrix fibres comprise synthetic fibres.
15. The filter media of any of paragraphs 5, 6, 8 or 10, wherein the matrix fibres comprise fibrillated fibres.
16. The filter media of any preceding paragraph, wherein the core has an Al₂O₃ content of at least 80 wt%, an SiO₂ content of less than 20 wt%, wherein the core is in the form of a powder or a fibre, and wherein the core has an average particle size of from 1 to 30 µm when the core is a powdered particle, and an average diameter of from 1 to 5 µm when the core is a fibre.
17. A method of manufacturing a first component for a filter media as defined in any of paragraphs 1 to 16, the method comprising at least partially coating a core with nanoalumina.
18. A method of manufacturing a filter media as defined in any of paragraphs 1 to 16, the method comprising:
   (a) forming a wet laid sheet from a fibrous slurry comprising the first component; and
   (b) drying the wet laid sheet to obtain the filter media.
19. The method of paragraph 18, further comprising coating the core with nanoalumina to form the first component.
20. The method of paragraph 19, wherein the fibrous slurry further comprises matrix fibres and/or binder fibres, and wherein the method comprises at least partially coating the core, matrix fibres and/or binder fibres with nanoalumina simultaneously.
21. A method of filtering a fluid, the method comprising passing the fluid through the filter media of any of paragraphs 1 to 16.

## Claims

1. A filter media comprising a first component, said first component having a core with an Al₂O₃ content of at least 10 wt% and a nanoalumina coating that at least partially coats the core.

2. The filter media of any preceding claim, wherein the Al₂O₃ content of the core is at least 20 wt%, preferably at least 40 wt%, preferably at least 60 wt%, or preferably at least 80 wt%.

3. The filter media of any preceding claim, wherein the SiO₂ content of the core is less than 60 wt%, preferably less than 40 wt %, or preferably less than 20 wt%.

4. The filter media of any preceding claim, wherein the core is in the form of a fibre, plate or powder particle.

5. The filter media of any preceding claim, wherein the core is selected from one or more of aluminium oxide powder, alumina fibres, crystalline aluminosilicates, and non-crystalline aluminosilicates.

6. The filter media of any preceding claim, wherein the core has an average size of from 0.1 to 50 µm.

7. The filter media of any preceding claim, wherein the first component comprises from 10 to 99 wt%, preferably from 50 to 95 wt%, or preferably from 70 to 90 wt% nanoalumina coating.

8. The filter media of any preceding claim, wherein the core constitutes from 1 to 90 wt%, preferably from 5 to 50 wt%, more preferably from 10 to 30 wt% of the first component.

9. The filter media of any preceding claim, wherein the filter media further comprises matrix fibres as a second component, preferably selected from one or more of cellulose fibres, synthetic fibres, and fibrillated fibres.

10. The filter media of claim 9, wherein the matrix fibres are at least partially coated with nanoalumina.

11. The filter media of any preceding claim, which comprises nanoalumina in an amount of from 20 to 70 wt%, preferably from 30 to 60 wt%, preferably from 40 to 50 wt% based on the total weight of the filter media.

12. The filter media of any preceding claim, wherein the filter media comprises less than 1 wt% glass fibres, preferably less than 0.1 wt% glass fibres.

13. A method of manufacturing a first component for a filter media as defined in any of claims 1 to 12, the method comprising at least partially coating a core with nanoalumina.

14. A method of manufacturing a filter media as defined in any of claims 1 to 12, the method comprising:
(a) forming a wet laid sheet from a fibrous slurry comprising the first component; and
(b) drying the wet laid sheet to obtain the filter media.

15. A method of filtering a fluid, the method comprising passing the fluid through the filter media of any of claims 1 to 12.
